# FASCICULE DE BREVET EUROPEEN

(11) **EP 0 926 793 B1**
(45) Date de publication et mention de la délivrance du brevet: **01.07.2009**
(21) Numéro de dépôt: 98410142.8
(22) Date de dépôt: 09.12.1998
(51) Int. Cl.: H02B 11/04

(54) **Borne de fixation et module de connexion électrique pour disjoncteur débrochable**
Anschlussklemme und Verbindungsmodul für trennbaren Schalter
Terminal for clamping and connector module for disconnectable circuit breaker

(30) Priorité: 18.12.1997 FR 9716419
(43) Date de publication de la demande: 30.06.1999
(73) Titulaire: Schneider Electric Industries SAS, 92500 Rueil-Malmaison (FR)
(72) Inventeur: Nebon, Jean-Pierre, 38050 Grenoble Cedex 09 (FR); Grelier, Claude, 38050 Grenoble Cedex 09 (FR); Toti-Buttin, Frédéric, 38050 Grenoble Cedex 09 (FR); Berguirol, Yves, 38050 Grenoble Cedex 09 (FR)
(74) Mandataire: Ritzenthaler, Jacques

(56) Documents cités:
- EP-A- 0 063 703
- DE-B- 1 040 102
- FR-A- 2 295 593
- US-A- 2 029 028
- US-A- 2 243 567

## Description

L'invention est relative à un mécanisme d'embrochage et de débrochage pour un appareillage électrique de commutation à sectionnement par débrochage axial, notamment pour disjoncteur extractible, susceptible d'être déplacé en translation entre une position embrochée, une position débrochée et une position extraite, par rapport à un châssis externe fixe. Le châssis est conformé en caisson et comprend une ouvcrture en face avant autorisant l'extraction du disjoncteur et une paroi postérieure à l'opposé de l'ouverture, cette paroi étant équipée de modules de raccordement comportant chacun une partie pour le raccordement électrique, notamment à un jeu de barres extérieur, et une deuxième partie dite module de connexion, comportant une ou plusieurs bornes de connexion, pour le raccordement électrique aux bornes du disjoncteur.

Le raccordement électrique entre les bornes de connexion et les bornes du disjoncteur se fait par l'intermédiaire de pinces d'embrochage qui comportent classiquement deux doigts séparés par une entretoise, des moyens de rappel élastiques tendant à ramener les doigts contre l'entretoise. Les extrémités des deux doigts se faisant face d'un premier côté de l'entretoise forment ensemble une première paire de mâchoircs enserrant une borne du disjoncteur et les extrémités des deux doigts se faisant face de l'autre côté de l'entretoise forment une seconde paire de mâchoires enserrant ladite partie interne de la borne de raccordement équipant le châssis, le mouvement d'ouverture d'une paire de mâchoires entraînant par effet de levier un mouvement de fermeture de l'autre paire de mâchoires.

Les deux paires de mâchoires ainsi définies n'ont pas les mêmes fonctions. En effet, une première étape de l'opération de montage est effectuée alors que l'appareillage est en position extraite, donnant accès aussi bien à sa face arrière qu'à la face interne de la paroi postérieure du châssis externe. Dans cette position, la pince est fixée par l'une de ses paires de mâchoires, dite de fixation, à la borne correspondante, dite borne de fixation, qui est alors librement accessible à l'opérateur. Dans un deuxième temps, le disjoncteur est introduit dans la cavité du châssis externe conformé en caisson, par un mouvement axial qui engendre un mouvement relatif de translation rapprochant les mâchoires encore libres, dites mâchoires d'embrochage, de la borne qui leur fait face, dite borne d'embrochage. C'est ce mouvement qui est utilisé pour réaliser l'embrochage proprement dit, c'est à dire l'introduction d'une partie saillante de la borne d'embrochage entre les mâchoires d'embrochage, forçant l'ouverture de celles-ci. Du fait de la présence de la borne de fixation entre les mâchoires de fixation, celles-ci ne peuvent plus se rapprocher l'une de l'autre. Le point de contact entre chaque mâchoire de fixation et la borne de fixation joue alors la fonction de pivot pour le bras correspondant et le mouvement d'écartement des mâchoires d'embrochage engendre un écartement des doigts au niveau de l'entretoise contre la force des moyens de rappel élastiques. Les moyens de rappel élastiques assurent en position embrochée la force nécessaire au contact permanent entre les mâchoires d'embrochage et les bornes d'embrochage. Inversement, lors du débrochage, le mouvement d'extraction du disjoncteur doit engendrer la séparation des mâchoires d'embrochage et de la borne correspondante, et en aucun cas la séparation entre les mâchoires de fixation et la borne de fixation.

La présente invention concerne plus particulièrement la fixation des mâchoires de fixation à la borne de fixation, c'est-à-dire à la borne sur laquelle doit rester la pince lors du débrochage de l'appareillage électrique, borne qui comporte par conséquent des moyens qui contribuent à assurer le maintien de la pince sur la borne lors du débrochage.

Classiquement, on peut prévoir pour cette fixation un organe de fixation auxiliaire tel qu'un boulon, qui coopère avec un alésage pratiqué dans le corps de la borne et avec un cadre de la pince, comme décrit dans le document US-A-4 160 142. Cette solution complique les opérations de montage et démontage. Or les pinces sont considérées comme des pièces d'usure qui doivent pouvoir être inspectées régulièrement et, au besoin, remplacées. Avec ce type de dispositif, ces opérations de maintenance sont donc compliquées. Enfin, la présence d'un organe auxiliaire de fixation augmente le nombre de pièces, ce qui induit un surcoût.

La solution décrite dans le document DE1040102, comporte une première borne de fixation ayant des machoires fixes disposées en V ou en U. La seconde borne de fixation venant en contact avec la première borne comporte un profil déformable. Le profil déformable est destiné à assurer un contact électrique satisfaisant.

On a donc proposé d'utiliser les moyens de rappel élastique de la pince pour également assurer la fermeture des mâchoires de fixation sur la borne de fixation, comme il est décrit par exemple dans le document FR-A-2 583 217. Les moyens de rappel élastique sont des ressorts portés par la pince et tendent à ramener les deux doigts vers une position médiane dans laquelle les deux paires de mâchoires ont une position partiellement ouverte. L'opérateur agit sur l'extrémité des mâchoires d'embrochage pour rapprocher celles-ci l'une de l'autre et ouvrir les mâchoires de fixation par effet de levier, puis engage les mâchoires de fixation sur une partie saillante de la borne de fixation. Une fixation par accrochage est obtenue par la coopération positive entre une encoche réalisée sur l'une des mâchoires de fixation et un rebord d'accrochage de forme conjuguée réalisée à une extrémité de la borne correspondante. L'invention s'apparente à ce dernier type de fixation, pour lequel le profil de la borne de fixation contribue au maintien de la pince sur la borne lors du débrochage, par coopération avec les mâchoires de fixation.

Dans ce dernier type d'accrochage, le dimensionnement de la pince doit répondre à plusieurs contraintes contradictoires. Tout d'abord, l'effort exercé par le ressort sur les mâchoires doit être suffisant pour permettre l'accrochage des mâchoires d'accrochage mais suffisamment faible pour permettre l'ouverture de la pince d'accrochage par l'opérateur agissant à l'extrémité des mâchoires d'embrochage. Par ailleurs, il s'avère dans la pratique qu'une fois les mâchoires de fixation en place sur la borne correspondante, les mâchoires d'embrochage ne sont pas parfaitement alignées avec la borne d'embrochage. Ce défaut d'alignement peut résulter de l'accrochage de la pince, des tolérances de construction entre le châssis fixe, le disjoncteur et le système de guidage en translation de ce dernier, ou de l'usure de ccrtains de ces éléments.

Pour répondre à ce problème d'alignement, il a été proposé dans le document FR-A-2 624 660 de conformer la pince et la borne de fixation de telle sorte qu'en position embrochée la pince puisse prendre une position oblique par rapport à la borne de fixation. Mais le contrôle du mouvement nécessite de nombreuses pièces mobiles interagissant entre la pince et les mâchoires de fixation. Le montage de la pince sur la borne de fixation devient complexe et la désolidarisation de la pince et de la borne de fixation nécessite le démontage complet de la pince, ce qui n'est pas compatible avec l'exigence de facilité de maintenance rappelée ci-dessus.

D'autres solutions telles décrites dans le document US2029028, résolvent aussi des problèmes d'alignement décrits ci-dessus.

Il s'avère donc nécessaire de proposer un dispositif d'accrochage simple et peu coûteux, permettant d'une part une fixation et la désolidarisation de la pince et de la borne d'accrochage par simple pression sur l'extrémité des mâchoires d'embrochage, et qui autorise par ailleurs un pivotement d'amplitude limitée entre le la pince et la borne de fixation.

Le mécanisme de connexion électrique pour un appareillage de commutation à sectionnement par décrochage axial selon l'invention est défini à la revendication 1.

Ce problème est résolu selon la présente invention par une borne de fixation électrique d'un mécanisme d'embrochage et de débrochage pour un appareillage de commutation à sectionnement par débrochage axial, notamment pour disjoncteur débrochable, comprenant une partie saillante s'étendant suivant un axe destiné à être placé parallèlement à l'axe de débrochage et définissant du côté de son extrémité libre une surface de contact destinée à coopérer avec les mâchoires de fixation d'une pince d'embrochage dont les mâchoires d'embrochage sont destinées à coopérer par embrochage avec une borne électrique d'embrochage, la surface de contact épousant l'enveloppe d'un secteur de cylindre d'axe perpendiculaire à l'axe de la partie saillante, d'angle d'ouverture supérieur à π radian ou 180° et apte à former un pivot pour la rotation de la pince autour de l'axe du cylindre.

La forme cylindrique de la surface de contact permet dans la phase d'embrochage d'assurer que les forces exercées par la pince sur la borne soient sensiblement indépendantes de l'angle pris par la pince. Ceci permet par exemple lors de l'embrochage d'amoindrir les risques de désolidarisation ou de déplacement de la pince par rapport à la borne, notamment si, au cours de l'embrochage en principe axial, les bornes d'embrochage ne s'avèrent pas parfaitement alignées avec les bornes de fixation. En outre, cette forme permet d'assurer ultérieurement en position embrochée que les conditions de contact entre la pince et la borne soient relativement indépendantes de l'angle que prend la pince par rapport à la borne. Enfin le fait que l'angle d'ouverture soit supérieur à 180° permet également d'assurer le maintien de la pince sur la borne de fixation lors du débrochage. La structure de la borne, qui peut n'être constituée que d'un unique bloc de matière, est extrêmement simple. Cette forme autorise une fabrication par extrusion, à faible coût. Dans la mesure ou un décalage angulaire de la pince par rapport à la borne n'a plus pour conséquence une tendance à l'ouverture de la pince et à l'augmentation des efforts de contact, l'usure des surfaces de contacts de la borne et de la pince est moindre, allongeant la durée de vie de ces pièces.

Avantageusement, le secteur de cylindre se raccorde géométriquement à la partie centrale de la partie saillante de chaque côté par une rainure sensiblement parallèle à l'axe du cylindre et formant butée apte à limiter le pivotement de la pince autour de l'axe du cylindre.

Avantageusement, la borne comprend des moyens de positionnement latéral permettant le positionnement de chaque pince le long de l'axe du cylindre, qui peuvent comporter au moins une encoche de positionnement disposée sensiblement perpendiculairement à l'axe du cylindre.

Les avantages de l'invention sont particulièrement apparents lorsque plusieurs bornes de connexion sont électriquement connectées les unes aux autres et appartiennent à un module de connexion électrique commun. Dans ce type d'appareil, décrit par exemple dans US-A-4 160 142, une multiplicité de pinces est utilisée pour chaque pôle de l'appareillage. Le choix du nombre exact de pinces utilisées est fait sur site en fonction de la destination de l'appareil, notamment de son courant nominal. Toutefois, la proximité des pinces sur un même module de connexion induit des risques d'interaction mécanique lors de l'embrochage, notamment si existent des défauts d'alignement. Ceci conduit, si l'on utilise des modules de connexion conventionnels, à écarter les pinces les unes des autres, au détriment de la compacité du module.

Dans ce cadre, l'invention a trait également à un module de connexion électrique comportant une pluralité de bornes de connexion à profil cylindrique telles que définies précédemment. La précision du guidage en rotation de la pince autour l'axe du cylindre de la borne permet de disposer les pinces très proches les unes des autres sans risque d'interaction mécanique lors de l'embrochage: dans le cas où certaines des bornes sont disposées dans le prolongement les unes des autres de sorte que leurs axes de cylindre soient confondus, la présence des moyens de positionnement latéral apporte un supplément de sécurité dans le guidage; dans le cas où certaines des bornes sont disposées parallèlement les unes aux autres, la limitation de l'amplitude de la rotation potentielle des pinces par les moyens de butée apportent également un supplément de sécurité. L'ensemble permet d'accroître considérablement la compacité et la simplicité de l'appareillage.

La multiplicité des pinces pour un même pôle électrique permet d'augmenter le nombre de points de contact, donc de diminuer la résistance globale de la connexion, d'où une diminution de la puissance électrique dissipée en chaleur au nivcau de la connexion si l'on compare à une borne unique de volume équivalent.

L'utilisation de modules de connexion à bornes multiples selon l'invention permet donc de diminuer considérablement la puissance dissipée par unité de volume de la connexion. La forme des modules de connexion permet une fabrication très simple par extrusion et tronçonnage d'un bloc de matière conductrice unique, préférentiellement de cuivre.

On obtient une pince de structure très simple, délivrant de hautes performances avec un faible nombre de pièces.

L'effet des bornes à surface de contact en secteur de cylindre définies ci-dessus sur le guidage en pivotement de la pince est déjà perceptible avec des pinces classiques. Il est cependant renforcé lorsque la pince destinée à coopérer avec une borne selon l'invention comporte au niveau des mâchoires de fixation des surfaces de contact concave ou en creux notamment une forme suivant l'enveloppe d'un cylindre de rayon égal ou supérieur à celui de la surface de contact de la borne, ou alternativement avec une forme qui en section droite soit polygonale.

Avec une telle configuration, le guidage en rotation de la pince est plus précis, et il est possible de placer les pinces plus proches les unes des autres, notamment dans le cas d'un module de connexion à bornes multiples. De plus, l'usure des pièces de contact lors de l'embrochage et du débrochage est minimisée. Par ailleurs, durant la phase d'embrochage, les mâchoires de fixation coopèrent avec une partie de la surface de contact cylindrique proche de l'extrémité de la borne alors que dans la phase de débrochage, elles peuvent coopérer avec une partie de la surface de contact cylindrique plus éloignée de l'extrémité libre de la borne. Cette mobilité de la zone de contact effective entre les mâchoires de fixation et la borne de fixation permet d'assurer la réversibilité de l'embrochage. En d'autres termes, elle contribue à empêcher pendant la phase de débrochage que la pince soit arrachée de la borne de fixation.

L'invention porte donc également sur un mécanisme de connexion électrique pour un appareillage de commutation à sectionnement par débrochage axial, notamment pour disjoncteur débrochable, comprenant au moins une borne de fixation comme décrit précédemment et une pince d'embrochage comportant des mâchoires de fixation coopérant avec la surface de contact de la borne de fixation de façon à former un pivot autour de l'axe de cylindre de la borne, chaque mâchoire de fixation ayant une surface dite de contact destinée à coopérer avec la surface de contact de la borne, de forme concave ou en creux, notamment de forme cylindrique ou ayant une section droite polygonale, ladite pince comprenant en outre des mâchoires d'embrochage destinées à coopérer par avec une borne électrique d'embrochage.

Il est à noter à ce niveau que les bornes de fixation selon l'invention peuvent être disposées indifféremment sur le disjoncteur ou sur la partie interne de la paroi postérieure du caisson. La première disposition, du type général décrit dans US-A-4 160 152, a l'avantage de permettre un accès très aisé aux pinces, et donne à l'opérateur l'assurance que la pince n'est pas sous tension lorsqu'il la manipule. Toutefois, cette disposition entraîne un risque supplémentaire de heurts pour les pinces car un disjoncteur est un dispositif lourd de manipulation malaisée. Le deuxième type de disposition, décrit par exemple dans FR-A-2 583 217 inverse les avantages et les inconvénients par rapport à la précédente.

D'autres avantages et caractéristiques ressortiront de la description qui va suivre de divers modes de réalisation de l'invention, donnés à titre d'exemples non limitatifs et représentés aux dessins annexés, dans lesquels
- la figure 1 est une vue schématique en perspective partiellement arrachée, montrant la paroi postérieure d'un châssis et l'emplacement des bornes et modules de connexion selon l'invention;
- la figure 2 est une vue en coupe d'un module de connexion selon l'invention, avec deux bornes dont les axes cylindriques sont parallèles et non confondus;
- la figure 3 est une vue en perspective d'un module de connexion selon l'invention, comportant une pluralité de bornes;
- les figures 4a, 4b et 4c sont des vues en perspective de modules de raccordement selon l'invention, coopérant avec une ou plusieurs pinces de connexion selon l'invention
- la figure 5 est une vue en perspective d'un module de connexion selon l'invention, comportant une borne unique;
- fa figure 6 est une vue en coupe, dans un plan comportant les axes E-E et A-A de la figure 3, d'un module de raccordement selon l'invention, muni de quatre pinces de connexion selon l'invention.

Sur les figures, un châssis fixe 10 est conformé en caisson parallélépipédique, servant de support à un disjoncteur embrochable 20. Le châssis 10 définit une ouverture 14 en face avant autorisant l'insertion et l'extraction du disjoncteur et une paroi postérieure 12 à l'opposé de l'ouverture 14, cette paroi 12 étant équipée de modules de raccordement 30 comportant chacun une partie 31 pour le raccordement électrique externe au caisson, notamment à un jeu de barres extérieur (non représenté), et une partie 32, dite dans la suite module de connexion, porteuse d'une ou plusieurs bornes de connexion 40, pour le raccordement électrique aux bornes du disjoncteur 20.

Chaque pôle du disjoncteur 20 comporte plusieurs bornes électriques 22 qui, en position embrochée, sont chacune raccordées électriquement à une borne de connexion 40 du module de connexion 30 correspondant par l'intermédiaire d'une pince d'embrochage 50.

Les bornes 40 du module de connexion 32 sont des bornes de fixation, ce qui signifie que les pinces 50 sont fixées aux bornes 40 lorsque le disjoncteur est extrait du châssis et qu'elles doivent le rester lors de l'embrochage et du débrochage. Chaque module 32 comporte un socle 33 de solidarisation à la paroi 12 et à la partie 31 ainsi qu'une partie saillante 42 s'étendant suivant un axe parallèle à l'axe de débrochage. L'extrémité libre de cette partie saillante est conformée en secteur de cylindre plein. Ainsi est définie une surface de contact 44 qui épouse l'enveloppe d'un secteur de cylindre d'axe A-A perpendiculaire à l'axe E-E de la partie saillante 42 et d'angle d'ouverture α supérieur à π (pi) radian ou 180°. Le secteur de cylindre se raccorde géométriquement à la partie centrale de la partie saillante 42 de chaque côté par une rainure 46 sensiblement parallèle à l'axe du cylindre. A ses extrémités axiales, le secteur de cylindre plein définit deux rebords 48 dans un plan sensiblement perpendiculaire à l'axe A-A du cylindre.

La pince d'embrochage 50 comporte un cadre 56 qui maintient une entretoise 59. Une pluralité de paires de doigts élémentaires 52 sont agencés à l'intérieur du cadre, chaque paire de doigts comportant un doigt de part et d'autre de l'entretoise 59. La paroi externe de chaque doigt 52 comporte deux rebords 53 à ses extrémités longitudinales. Un ou plusieurs ressorts 58 sont bandés entre les rebords 53 à leurs extrémités et un rebord 57 du cadre 56 en leur centre. Les paires de doigts définissent ainsi d'un côté de l'entretoise une paire de mâchoires d'embrochage 54 et de l'autre côté de l'entretoise une paire de mâchoires de fixation 55.

La figure montre les mâchoires de fixation 55 en contact avec la surface de contact 44 cylindrique de la borne 40. Ce contact se fait pour chaque doigt suivant une ou plusieurs génératrice parallèle à l'axe A-A du cylindre. Considéré dans un plan perpendiculairc à l'axe A-A il est alors ponctuel ou quasi-ponctuel.

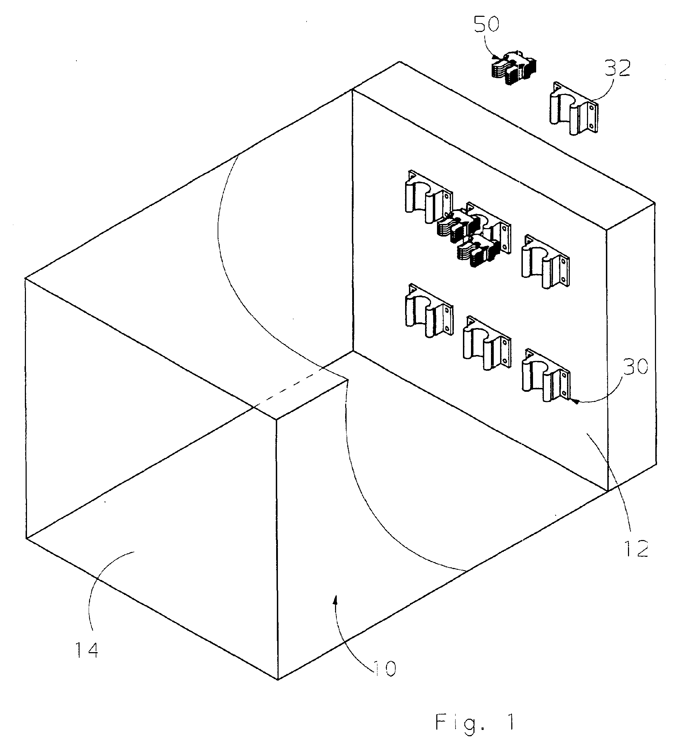

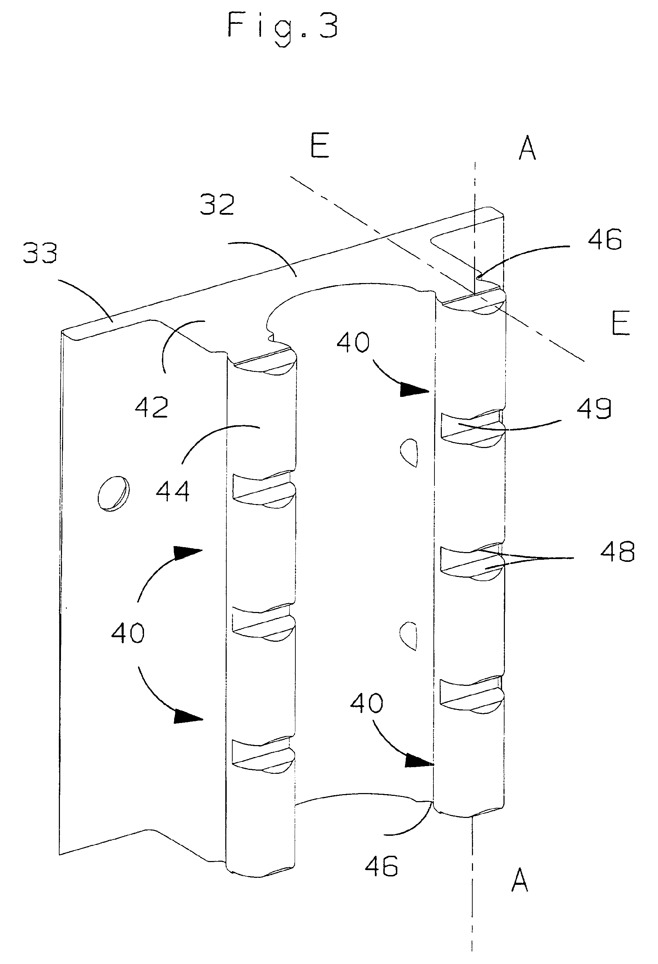

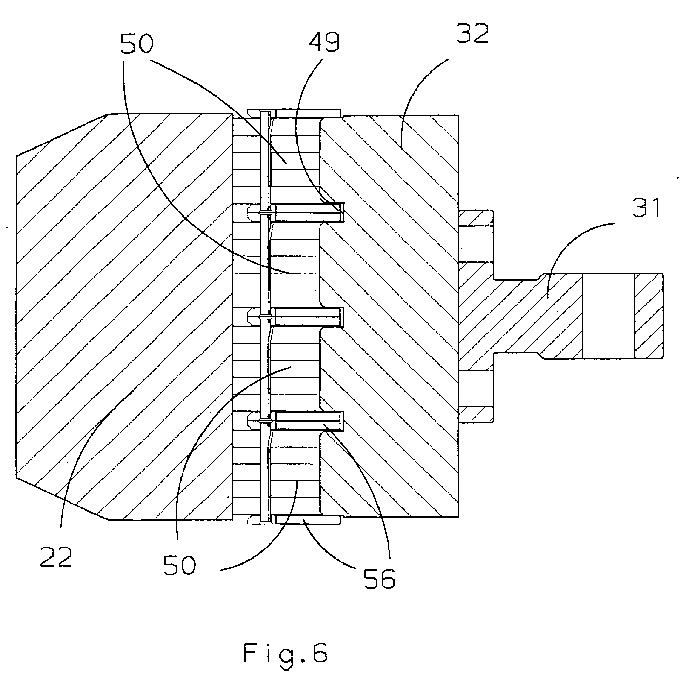

On a représenté sur les figures 1 à 3 des modules de connexion comportant plusieurs bornes dans un même bloc de matière extrudé puis tronçonné au niveau d'encoches 49 et des extrémités axiales. La figure 6 montre comment deux des rebords du cadre 56 de chaque pince 50 viennent coopérer avec un rebord latéral 48 (fig. 3) de chaque encoche 49, de manière à assurer le positionnement et le maintien de la pince 50 par rapport à l'axe A-A

Les bornes 22 correspondantes du disjoncteur peuvent être des bornes isolées ou, par exemple des profilés en U d'écartement correspondant à celui des axes parallèles des cylindres du module de connexion et de hauteur égale à celle du module.

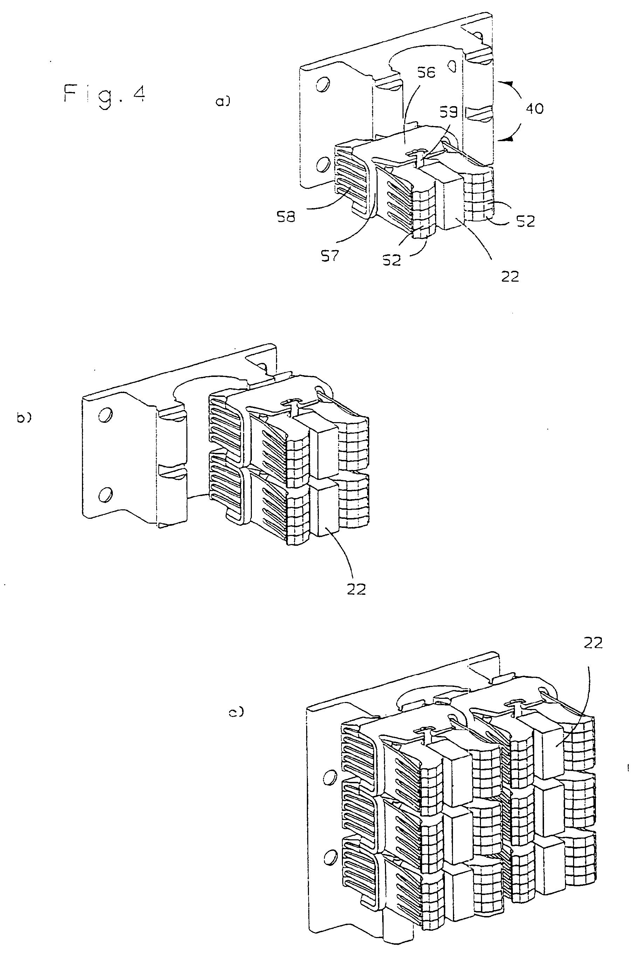

Ce type de module de connexion permet de choisir au moment de la mise en service, en particulier en fonction du courant nominal et de la tenue electrodynamique de l'installation, le nombre de pinces effectivement utilisé. On a ainsi schématisé différente possibilités de connexion sur les figures 4 a) à 4 c).

Le nombre et l'emplacement des pinces pourra également être déterminé par le choix du disjoncteur. En effet, rien n'oblige à avoir autant d'emplacement pour les pinces sur le disjoncteur et sur le module de connexion. En fait, un seul type de châssis externe avec sa paroi postérieure 12 munie de modules de raccordement 30 à bornes multiples peut être utilisé pour différents disjoncteurs, dont certains auront un faible nombre de bornes 22 ou des bornes permettant l'embrochage d'un nombre limité de pince, alors que d'autres permettront le raccordement d'un plus grand nombre de pinces. On obtient donc par cette configuration une grande flexibilité d'utilisations pour un même châssis.

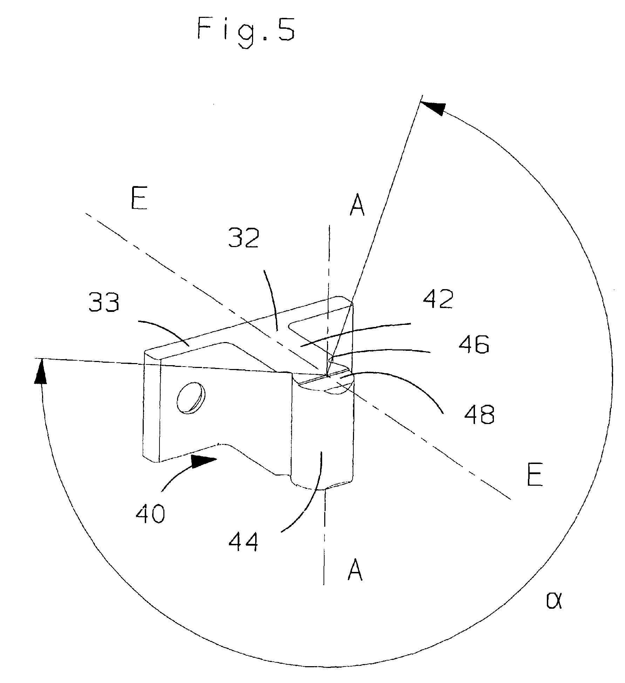

Comme on le voit sur les figures 3 à 5, le nombre de bornes le long d'un même axe A-A peut varier et être choisi librement en fonction des besoins et de l'encombrement. De même, le nombre de rangées peut varier. A la limite, le module de connexion peut également ne comporter qu'une seule borne, comme le montre la figure 5. Les rebords 48 servent peuvent alors coopérer avec la pince 50 pour faciliter son positionnement et limiter son mouvement suivant l'axe A-A.

L'opération d'embrochage est effectuée de la manière suivante.

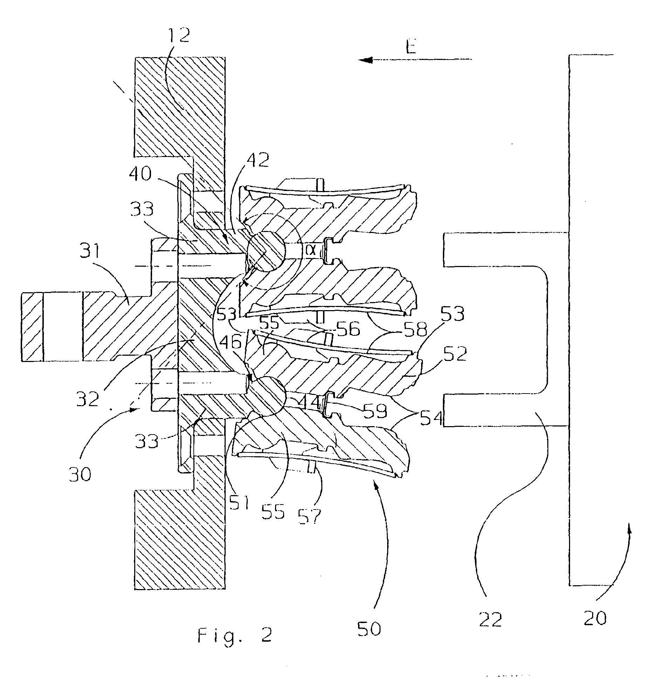

Dans une première étape, l'appareillage est en position extraite, c'est-à-dire complètement sorti du châssis externe 10. L'accès aux bornes 22 du disjoncteur 20 et à la face interne de la paroi postérieure 12 du châssis externe 10 est donc libre. Dans cette position, l'opérateur saisit la pince par ses mâchoires d'embrochage 54 et les rapproche l'une de l'autre de façon à ouvrir les mâchoires de fixation contre la force des ressorts 58 et à venir enserrer la partie cylindrique de la borne 40. La pince 50 peut alors pivoter autour de l'axe A-A du cylindre. L'angle d'ouverture a supérieur à 180° du secteur cylindrique de la borne 40 assure un débattement angulaire important de la pince avec une résultante des forces de contact de module sensiblement constant pour chaque mâchoire de fixation. Ce débattement est précisément limité par les butées 46, comme on le voit particulièrement sur la figure 2. Dans toutes les positions angulaires intermédiaires, la sollicitation des ressort 58 reste constante, ce qui signifie que le module de la résultante des forces de contact entre la pince et la borne est relativement indépendant du positionnement angulaire de la pince.

Dans une deuxième étape, le disjoncteur 20 est introduit dans la cavité du châssis externe par un mouvement axial dans la direction de la flèche E, qui rapproche les mâchoires d'embrochage 54 de la borne d'embrochage 22 correspondante. Lorsque les bornes 22 entrent en contact avec les mâchoires d'embrochage 54, la forme évasée des mâchoires d'embrochage permet un guidage de la pince qui pivote progressivement autour de l'axe A-A pendant la phase d'embrochage pour s'adapter aux éventuels défauts d'alignement entre les bornes de fixation, l'axe médian de la pince et les bornes d'embrochage. Lorsque la borne d'embrochage est insérée entre les mâchoires d'embrochage, elle force l'ouverture de celles-ci. Du fait de la réaction au contact entre chaque mâchoire de fixation et la borne de fixation, on assiste à un progressif écartement des doigts au niveau de l'entretoise contre la force des ressorts 58. Durant l'embrochage, le frottement entre les bornes d'embrochage 22 et les mâchoires d'embrochage 54 engendre au niveau du contact entre les mâchoires de fixation 55 et les bornes de fixation 40 des forces dont la résultante à une composante non mule suivant l'axe E-E de module égale à la résultante des forces de frottements et opposé à celle-ci. Le point ou la zone de contact est assez éloignée des rainures 46.

En position embrochée, les ressorts 58 assurent la force nécessaire au contact permanent entre les mâchoires et les bornes. Le module de la résultante des forces de contacts au niveau des machoires de fixation est plus important à la fin de cette deuxième étape de l'opération d'embrochage qu'à la fin de la première étape. De préférence, les dimensions de la pince, notamment celles de l'entretoise et des mâchoires de fixation, sont choisies de telle sorte qu'en position embrochée, le point de contact ou le centre de la zone de contact électrique et mécanique considéré dans un plan de coupe perpendiculaire à l'axe A-A, soit à l'extrémité d'un rayon à angle droit avec la direction E-E, et que la direction de la résultante des forces de contact sur chaque mâchoire soit perpendiculaire à l'axe E-E et à l'axe A-A.

Inversement, lors du débrochage, le mouvement du disjoncteur produit un frottement entre les bornes d'embrochage et les mâchoires d'embrochage, qui engendre des efforts sur la borne 40, dans l'axe d'embrochage. L'angle d'ouverture α supérieur à 180° du secteur cylindrique de la borne de fixation permet alors d'assurer le maintien de la pince sur la borne de fixation. En effet, les points de contact entre la pince et la borne 40 peuvent se déplacer vers la partie de la surface de contact 44 la plus proche des rainures 46, dans une zone où la normale à la surface de contact au point de contact à une composante positive non nulle dans la direction de la flèche E. La résultante de la réaction de la borne 40 sur les mâchoires de fixation 55 a une composante importantc suivant l'axe d'embrochage et une composante faible suivant la normale à l'axe d'embrochage, ce qui garantit la non ouverture des mâchoires de fixation. Ce sont donc les mâchoires d'embrochage qui se séparent des bornes d'embrochage.

On voit donc que, suivant les différentes phases considérées, les zones de contact effectives entre les mâchoires de fixation et la borne de fixation se déplacent sur la surface de contact 44 en secteur de cylindre, ces zones assurant le contact mécanique dans toutes les phases, ainsi que le contact électrique en position embrochée.

Ce déplacement sera mieux contrôlé lorsque les mâchoires de fixation 55 de la pince ont elles-mêmes une surface de contact 51 une forme concave. C'est le cas pour le mode de réalisation de la figure 2 pour lequel la surface de contact 51 des mâchoires de fixation 55 épousent un secteur de cylindre de même rayon que celui de la surface de contact 44. On peut également envisager de conformer les mâchoires de fixation 55 suivant un secteur de cylindre de rayon très légèrement supérieur à celui utilisé pour la surface de contact 44 ce qui permet pour certaines application de mieux maîtriser le caractère ponctuel du contact, sans nuire à la mobilité nécessaire du point de contact lors de l'embrochage et du débrochage. On peut également envisager d'autres surfaces en creux pour les mâchoires de fixation 55, par exemple des surfaces polygonales approchant un secteur de cylindre de rayon donné, ce qui permet de multiplier le nombre de point de contact.

Les modes de réalisation décrits ne présentent aucun caractère limitatif et la protection demandée pour la présente invention couvre notamment toutes les modifications et variantes couvertes par les revendications. Par exemple, il est possible de réunir les deux parties 31 et 32 du module de raccordement 30 en un bloc de matière unique. Il est également possible de prévoir des bornes individuelles venant se fixer sur un socle commun du module de connexion. La solidarisation du module de raccordement à la paroi 12 peut être faite différemment, par exemple au niveau de la partie 31, ou par l'intérieur de la paroi postérieur 12 du châssis. La structure de la pince peut être différente, par exemple avec des axes de pivotement matérialisés pour chaque doigt ou avec des ressorts différents.

On rappelle également qu'il est possible d'inverser le montage : les bornes de fixation sont alors solidaires du disjoncteur et les bornes de connexion deviennent les bornes d'embrochage solidaires de la paroi postérieure du châssis.

## Revendications

1. Mécanisme de connexion électrique pour un appareillage de commutation à sectionnement par débrochage axial, notamment pour disjoncteur débrochable (20), comprenant
- au moins une borne de fixation (40) comprenant une partie saillante (42) s'étendant suivant un axe (E-E) destiné à être placé parallèlement à l'axe de débrochage et définissant du côté de son extrémité libre une surface dite de contact (44) qui épouse l'enveloppe d'un secteur de cylindre d'axe (A-A) perpendiculaire à l'axe (E-E) de la partie saillante (42), d'angle d'ouverture (α) supérieur à (π) radian ou 180°,
- une pince d'embrochage (50) comportant
■ des mâchoires de fixation (55) ayant une surface dite de contact (51) de forme concave ou en creux, notamment de forme cylindrique ou ayant une section droite polygonale, coopérant avec la surface de contact (44) de la borne de fixation (40) de façon à permettre un pivotement de la pince autour de l'axe de cylindre (A-A) de la borne de fixation (40) tout en assurant que le module de la résultante des forces exercées par la pince (50) sur la borne de fixation (40) soit relativement indépendant de l'angle pris par la pince (50),
■ des mâchoires d'embrochage (54) destinées à coopérer avec une borne électrique (22) d'embrochage par insertion de la borne d'embrochage (22) entre les mâchoires d'embrochage (54),
**caractérisé en ce que** ladite au moins une borne de fixation (40) comprend des moyens de positionnement (48) permettant le positionnement de chaque pince le long de l'axe du cylindre (A-A), lesdits moyens de positionnement comportant au moins un rebord de positionnement (48) disposé sensiblement perpendiculairement à l'axe du cylindre (A-A).

2. Mécanisme de connexion électrique selon la revendication 1, **caractérisée en ce que** chaque pince (50) comprend un cadre (56) ayant des rebords venant coopérer avec les moyens de positionnement (48), de manière à assurer le positionnement et le maintien de la pince (50) par rapport à l'axe A-A.

3. Mécanisme de connexion électrique selon les revendications 1 ou 2, dans lequel le secteur de cylindre de la borne de fixation (40) se raccorde géométriquement à la partie centrale de la partie saillante de chaque côté par une rainure (46) sensiblement parallèle à l'axe du cylindre (A-A) et formant butée apte à limiter le pivotement de la pince (50) autour de l'axe du cylindre (A-A).

4. Ensemble de connexion électrique comportant une pluralité mécanismes de connexion électrique selon l'une quelconque des revendications 1 à 3, dont les bornes de fixation sont électriquement connectées les unes aux autres.

5. Ensemble de connexion électrique selon la revendication 4, dans lequel certaines au moins des bornes de fixation sont disposées dans le prolongement les unes des autres de sorte que leurs axes de cylindre soient confondus.

6. Ensemble de connexion électrique selon l'une quelconque des revendications 4 et 5, dans lequel certaines au moins des bornes de fixation sont disposées de telle sorte que leurs axes de cylindre soient parallèles et non confondus.

7. Disjoncteur électrique (22) comportant au moins un mécanisme de connexion électrique ou un Ensemble de connexion électrique (32) selon l'une quelconque des revendications précédentes.

8. Châssis externe (10) pour un disjoncteur (20) multipolaire débrochable comportant au moins un mécanisme de connexion électrique ou un ensemble de connexion électrique selon l'une quelconque des revendications précédentes.

## Claims

1. An electrical connection mechanism for a switchgear apparatus with disconnection by axial withdrawal, in particular for a plug-in circuit breaker (20), comprising
- at least one fixing terminal (40) comprising a salient part (42) extending along an axis (E-E) designed to be placed parallel to the withdrawal axis and defining on the side where its free end is located a surface called contact surface (44) which exactly follows the outline of a cylinder sector of axis (A-A) perpendicular to the axis (E-E) of the salient part (42), of opening angle (α) greater than (π) radian or 180°,
- a plug-in contact (50) comprising
- fixing jaws (55) having a surface called contact surface (51) of concave or hollow shape, in particular of cylindrical shape or having a polygonal straight cross section, operating in conjunction with the contact surface (44) of the fixing terminal (40) in such a way as to enable pivoting of the plug-in contact around the cylinder axis (A-A) of the fixing terminal (40) while ensuring that the modulus of the resultant of the forces exerted by the plug-in contact (50) on the fixing terminal (40) is relatively independent from the angle taken by the plug-in contact (50),
- plug-in jaws (54) designed to operate in conjunction with a plug-in electrical terminal (22) by insertion of the plug-in terminal (22) between the plug-in jaws (54),
**characterized in that** said at least one fixing terminal (40) comprises positioning means (48) enabling each plug-in contact to be positioned along the cylinder axis (A-A), said positioning means comprising at least one positioning edge (48) arranged appreciably perpendicularly to the cylinder axis (A-A).

2. The electrical connection mechanism according to claim 1, **characterized in that** each plug-in contact (50) comprises a frame (56) having edges operating in conjunction with the positioning means (48) so as to perform positioning and securing of the plug-in contact (50) with respect to the axis (A-A).

3. The electrical connection mechanism according to claims 1 or 2, in which the cylinder sector of the fixing terminal (40) is connected geometrically to the central part of the salient part on each side by a groove substantially parallel to the cylinder axis (A-A) and forming a stop designed to limit swivelling of the plug-in contact (50) around the axis (A-A) of the cylinder.

4. An electrical connection assembly comprising a plurality of electrical connection mechanisms according to any one of claims 1 to 3, the fixing terminals whereof are electrically connected to one another.

5. The electrical connection assembly according to claim 4, wherein at least some of the fixing terminals are arranged in the extension of one another so that their cylinder axes are identical.

6. The electrical connection assembly according to either one of the claims 4 and 5, wherein at least some of the fixing terminals are arranged in such a way that their cylinder axes are parallel and not identical.

7. An electrical circuit breaker (22) comprising at least one electrical connection mechanism or an electrical connection assembly (32) according to any one of the foregoing claims.

8. An external frame (10) for a plug-in multipole circuit breaker (20) comprising at least one electrical connection mechanism or an electrical connection assembly according to any one of the foregoing claims.

## Patentansprüche

1. Elektrische Anschlussvorrichtung für ein elektrisches Schaltgerät mit Trennung durch axiales Herausfahren, insbesondere für einen ausfahrbaren Leistungsschalter (20), welche Vorrichtung
- mindestens eine Befestigungsklemme (40) mit einem herausstehenden Teil (42), das sich in einer parallel zur Ausfahrachse verlaufenden Achse (E-E) erstreckt und an seinem freistehenden Ende eine so genannte Kontaktfläche (44) aufweist, die der Hüllfläche eines Zylinderabschnitts folgt, welcher in einer rechtwinklig zur Achse (E-E) des herausstehenden Teils verlaufenden Achse (A-A) angeordnet ist und einen Öffnungswinkel (α) größer als (π) im Bogenmaß bzw. 180° aufweist,
- sowie eine Kontaktzange (50) mit
• Befestigungs-Spreizbacken (55), an denen eine konkav bzw. hohlförmig, insbesondere zylinderförmig ausgebildete oder einen polygonalen geradlinigen Abschnitt aufweisende, so genannte Kontaktfläche (51) ausgebildet ist, die mit der Kontaktfläche (44) der Befestigungsklemme (40) zusammenwirkt, derart dass die Kontaktzange um die Zylinderachse (A-A) der Befestigungsklemme (40) verschwenkt werden kann und gleichzeitig gewährleistet ist, dass die Größe der Resultierenden der von der Kontaktzange (50) auf die Befestigungsklemme (40) ausgeübten Kräfte verhältnismäßig unabhängig von der jeweiligen Winkelstellung der Kontaktzange (50) ist,
• und Kontakt-Spreizbacken (54) umfasst, die dazu dienen, mit einer Kontaktklemme (22) zusammenzuwirken, indem die Kontaktklemme (22) zwischen die Kontakt-Spreizbacken (54) eingeschoben wird,
**dadurch gekennzeichnet, dass** die genannte, mindestens einfach vorhandene Befestigungsklemme (40) Positioniermittel (48) umfasst, die eine Positionierung jeder Kontaktzange entlang der Zylinderachse (A-A) erlauben, wobei die genannten Positioniermittel mindestens einen, annähernd rechtwinklig zur Zylinderachse (A-A) angeordneten Positionierabsatz (48) umfassen.

2. Elektrische Anschlussvorrichtung nach Anspruch 1, **dadurch gekennzeichnet, dass** jede Kontaktzange (50) einen Rahmen (56) mit Vorsprüngen umfasst, die mit den Positioniermitteln (48) zusammenwirken, derart dass die Positionierung und Halterung der Kontaktzangen (50) in Bezug zur Achse (A-A) gewährleistet wird.

3. Elektrische Anschlussvorrichtung nach Anspruch 1 oder 2, bei der sich an den Zylinderabschnitt der Befestigungsklemme (40) im Mittelabschnitt des herausstehenden Teils zu beiden Seiten geometrisch eine Nut (46) anschließt, die annähernd parallel zur Zylinderachse (A-A) verläuft und einen Anschlag bildet, welcher den Drehwinkel der Kontaktzange (50) beim Verschwenken um die Zylinderachse (A-A) begrenzt.

4. Elektrisches Anschlusssystem mit mehreren elektrischen Anschlussvorrichtungen nach irgendeinem der Ansprüche 1 bis 3, bei dem die einzelnen Befestigungsklemmen elektrisch miteinander verbunden sind.

5. Elektrisches Anschlusssystem nach Anspruch 4, bei dem mindestens einige der Befestigungsklemmen übereinander angeordnet sind, derart dass ihre Zylinderachsen miteinander fluchten.

6. Elektrisches Anschlusssystem nach irgendeinem der Ansprüche 4 und 5, bei dem mindestens einige der Befestigungsklemmen so angeordnet sind, dass ihre Zylinderachsen parallel zueinander verlaufen, jedoch nicht miteinander fluchten.

7. Leistungsschalter (22) mit mindestens einer elektrischen Anschlussvorrichtung oder einem elektrischen Anschlusssystem (32) nach irgendeinem der vorhergehenden Ansprüche.

8. Externe Einschubkassette (10) für einen mehrpoligen ausfahrbaren Leistungsschalter mit mindestens einer elektrischen Anschlussvorrichtung oder einem elektrischen Anschlusssystem nach irgendeinem der vorhergehenden Ansprüche.
